# FASCICULE DE BREVET EUROPEEN

(11) **EP 2 486 444 B1**
(45) Date de publication et mention de la délivrance du brevet: **02.06.2021**
(21) Numéro de dépôt: 10778685.7
(22) Date de dépôt: 05.10.2010
(51) Int. Cl.: G02C 13/00

(54) **PROCEDE ET EQUIPEMENT DE MESURES POUR LA PERSONNALISATION ET LE MONTAGE DE LENTILLES OPHTALMIQUES CORRECTRICES**
MESSVERFAHREN UND AUSRÜSTUNG ZUR ANPASSUNG UND MONTAGE VON KORRIGIERENDEN OPHTHALMISCHEN LINSEN
MEASUREMENT METHOD AND EQUIPMENT FOR THE CUSTOMIZATION AND MOUNTING OF CORRECTIVE OPTHALMIC LENSES

(30) Priorité: 05.10.2009 FR 0904757
(43) Date de publication de la demande: 15.08.2012
(73) Titulaire: Interactif Visuel System (I V S), 75017 Paris (FR)
(72) Inventeur: ENCAOUA, David, F-78240 Carrieres sur Seine (FR); THOMET, Pascal, 75015 Paris (FR); SAGNARD, Julien, F-93100 Montreuil sous Bois (FR)
(74) Mandataire: Novagraaf Technologies
(86) Numéro de dépôt international: PCT/FR2010/000662
(87) Numéro de publication internationale: WO 2011/042623

(56) Documents cités:
- FR-A1- 2 914 173
- US-A1- 2009 021 693

## Description

### Domaine technique

La présente invention concerne le domaine de la prise de mesures effectuées par un opticien en vue de la personnalisation de lentilles ophtalmiques correctrices et le montage sur la monture desdites lentilles.

### Technique antérieure

L'opticien procède à l'acquisition de données nécessaires à l'optimisation de la préparation de verres correcteurs sur un patient équipé des montures qu'il a choisies, afin de déterminer des données relatives à la configuration d'implantation des verres correcteurs en regard des yeux du porteur.

On connaît dans l'état de la technique le
brevet français FR2914173 décrivant un procédé de mesure de la position, suivant une direction horizontale du plan sagittal, d'un point remarquable d'un œil d'un sujet, en particulier le Centre de Rotation de l'œil (CRO) dans un référentiel lié à la tête de ce sujet, caractérisé en ce qu'il comporte les étapes de :
S1) agencer dans une première posture relative la tête du sujet par rapport à la pupille d'entrée d'un appareil de capture d'image disposé en regard du visage du sujet,
S2) dans cette première posture relative, capturer une première image plane de l'œil au moyen de l'appareil de capture d'image,
S3) identifier, sur cette première image, l'image d'un premier point de référence prédéterminé de l'œil,
S4) agencer dans une seconde posture relative la tête du sujet par rapport à la pupille d'entrée de l'appareil de capture d'image, distincte de la première posture relative,
S5) dans cette seconde posture relative, capturer une seconde image plane de l'œil au moyen de l'appareil de capture d'image,
S6) identifier, sur cette seconde image, l'image d'un second point de référence prédéterminé de l'œil,
S9) calculer ladite position du point remarquable de l'œil en fonction des images des premier et second points de référence de l'œil et de première et seconde valeurs d'un paramètre géométrique de posture respectivement associées aux première et seconde postures relatives. Le rapprochement des images des premier et second points de référence de l'œil est représentatif du déplacement angulaire apparent de l'œil à partir de deux points de vue différents correspondant aux première et seconde postures relatives. Un calcul de parallaxe permet alors, compte-tenu des informations sur les deux points de vue que constituent les première et seconde valeurs du paramètre de posture, d'obtenir la position recherchée.

Le calcul de parallaxe proposé pour calculer la position du point remarquable de l'œil, consiste à exécuter les sous-étapes de :
- déduire de l'image du premier point de référence de l'œil et de la première valeur du paramètre de posture, les coordonnées, dans ledit référentiel de la tête du sujet, d'une première droite d'observation (DO1) reliant la pupille de l'appareil de capture d'image et le premier point de référence de l'œil,
- déduire, de l'image du second point de référence de l'œil et de la seconde valeur du paramètre de posture, les coordonnées, dans ledit référentiel de la tête du sujet, d'une seconde droite d'observation (D02) reliant la pupille de l'appareil de capture d'image et le second point de référence de l'œil,
- calculer la position du point remarquable de l'œil du sujet dans le référentiel lié à la tête du sujet en fonction des coordonnées des première et seconde droites d'observation. Le point remarquable dont la position est recherchée est le centre de rotation de l'œil du sujet et dans lequel la position de ce point est calculée en tant que position du point d'intersection ou, si ces droites ne sont pas rigoureusement sécantes, de plus grande proximité des deux droites d'observation.

Cette solution connue de mesure d'un point remarquable de l'œil par calcul de parallaxe fournit des informations exactes sur la position géométrico-physionomiques du centre de rotation de l'œil seulement lorsque l'axe du regard, défini par la droite passant par le Centre de rotation de l'œil (CRO) et le centre de la pupille de l'œil, passe exactement par le centre optique de la lentille d'entrée de la caméra, et que les points de références choisis pour chacune des deux images sont le centre de la pupille de l'œil.

En effet l'intersection des droites d'observation (D01 et D02) mentionnées dans la solution donne la position d'un point de référence le l'œil dans l'espace par rapport à la tête du sujet si, entre les deux captures d'image, ce point ne s'est pas déplacé par rapport à la tête du sujet. Le Centre de Rotation de l'œil (CRO) ne se déplace pas par rapport à la tête du sujet mais n'étant pas matériel, il n'est pas visible sur l'image et ne peut donc pas être directement utilisé comme point dit de référence. La pupille est elle visible, mais afin de mesurer son centre de rotation, l'œil doit effectuer une rotation entre les deux captures d'image ce qui implique que les pupilles du sujet se sont déplacés, comme tous les points de l'œil distincts de son centre de rotation. L'intersection des droites d'observation (DO1 et DO2) ne donne donc pas la position des pupilles. Cependant, lorsque le sujet fixe la lentille d'entrée de la caméra, c'est-à-dire lorsque l'axe du regard passe par le centre optique de la lentille d'entrée de la caméra, le centre de rotation de l'œil (CRO) est aligné avec le centre de la pupille de l'œil et le centre optique de la caméra, ce qui fait que les droites d'observation D01 et D02 sont confondues avec l'axe du regard et se croisent au niveau du centre de rotation de l'œil (CRO). En d'autres termes le CRO et le centre de la pupille de l'œil sont confondus sur les images capturées par la caméra. Le calcul de parallaxe utilisant la pupille comme point de référence donne alors la position du CRO et la mesure recherchée est alors correcte.

Par contre, lorsque le sujet ne fixe pas précisément la caméra d'acquisition, les droites d'observation D01 et D02 ne sont pas confondues avec l'axe du regard et le CRO n'est plus confondu avec la pupille sur les images. Le calcul de parallaxe proposé à partir du centre des pupilles donne donc un point éloigné de la position du centre de rotation de l'œil CRO et les résultats concernant la mesure de la position du centre de rotation de l'œil (CRO) sont donc erronés.

Par ailleurs, une étude de l'art antérieur montre qu'une grande partie des systèmes de mesures électroniques existants pour le centrage de verres correcteurs sur une monture de lunettes se fait pour un port de tête et une convergence des yeux lorsque le porteur est en vision de loin (c'est-à-dire que le porteur fixe un point à l'infini droit devant lui). Cette vision de loin sera reproduite soit en éloignant la caméra - mais cela rend l'utilisation délicate en raison du besoin d'espace dans le magasin et de l'éloignement de l'opticien par rapport à son client - soit au moyen d'un système optique projetant une image virtuellement placée à l'infini ou éloignée par rapport au porteur.

Alternativement, on peut rapprocher la caméra en la disposant par exemple à 80 cm du porteur, en utilisant un miroir placé face au porteur, également à 80 cm. Le porteur se regarde alors dans le miroir, soit à une distance virtuelle de 160 cm, ce qui devient acceptable pour les mesures relatives à la vision de loin. Cependant, dans ce cas l'axe du regard de chaque œil ne passe pas par le centre optique de la caméra et l'erreur sur le CRO est importante.

Ces difficultés de la solution proposée par le brevet français FR2914173 impliquent donc des contraintes fortes sur la mise en œuvre de ce procédé puisque les résultats ne seront précis que si l'axe du regard est précisément aligné avec la pupille d'entrée de la caméra. Ces difficultés seront amplifiées lorsque le porteur n'est pas avisé sur l'importance d'une observation rigoureuse des consignes relatives à la direction dans laquelle il doit fixer son regard.

La conséquence est que les données fournies peuvent être affectées d'une erreur significative, se traduisant par une confection de verres correcteurs dont la personnalisation est fondée sur des données inexactes et conduisant donc à la fabrication de verres qui ne sont en réalité pas optimum.

### Exposé de l'invention

On entend par « point remarquable virtuel (PRV) » un point qui n'est visible que sur une image au plus obtenue par des moyens d'acquisition d'image, et qui présente un intérêt pour les mesures réalisées dans le cadre de la fabrication de verres correcteurs personnalisés et/ou au montage de verres correcteurs.

Pour résoudre un ou plusieurs des inconvénients cités précédemment un procédé de mesure de la position d'un point remarquable virtuel associé à la face d'un sujet porteur de verre correcteur dans un repère spatial (RS) lié au verre correcteur, la monture de lunette ou plus généralement à la tête dudit sujet, comporte les étapes du procédé de mesure défini dans la revendication 1. La revendication 11 définit un système de mesure, et la revendication 12 un produit programme d'ordinateur. Des modes de réalisation additionnels sont définis dans les revendications dépendantes.

Des caractéristiques ou des modes de réalisation particuliers, utilisables seuls ou en combinaison, sont :
- la relation géométrique est définie par les coordonnées des points de référence sur au moins deux images ;
- lesdits points de référence de la relation géométrique varient dans le repère spatial de l'acquisition d'une image à l'autre;
- la relation géométrique comprend une modélisation géométrique de l'œil fixant une cible, modélisation en trois dimensions ou projetée sur le plan des au moins deux images ;
- le point de référence sur au moins deux des images est le centre géométrique de l'iris, de la cornée ou d'une image cornéenne causé par au moins une source externe ;
- l'étape de calcul d'au moins une des coordonnées du point remarquable virtuel consiste à :
   - émettre une hypothèse initiale d'un point remarquable virtuel théorique sur l'une au moins desdites coordonnées ;
   - calculer un point de référence théorique en utilisant la relation géométrique ;
   - si la distance entre le point de référence théorique et le point de référence observé est supérieure à une valeur prédéterminée, modifier au moins une fois ladite hypothèse pour minimiser ladite distance ;
- le point remarquable virtuel (PRV) est le centre de rotation de l'œil (CRO) ; deux des images au moins sont acquises dans des situations correspondant à des angles de vision/tête distincts ; et la direction du regard ne passe pas, dans au moins une image, par le centre optique du moyen d'acquisition d'images ;
- pendant l'acquisition d'images, le sujet regarde un point de fixation générée par un dispositif, la distance optique entre l'œil du sujet et le point de fixation étant différente de la distance optique entre l'œil du sujet et le moyen d'acquisition. Dans un cas particulier, le sujet regarde son reflet pendant l'acquisition d'images grâce à un miroir.
- le moyen d'acquisition d'images est constitué par une caméra procédant à l'enregistrement d'une séquence d'images ;
- l'enregistrement des images est effectué au moment où le sujet regarde un point de fixation PF dont la position est connue par rapport au moyen d'acquisition d'images ;
- il comporte en outre une étape d'estimation de la direction du regard prenant en compte au moins deux points caractéristiques de l'œil sur lesdites images ;
- le moyen d'acquisition comportant au moins deux dispositifs de prise d'image, l'étape d'estimation de la position de la face par rapport au moyen d'acquisition d'images est réalisée par traitement d'une série d'images acquises simultanément ; et/ou
- l'étape d'estimation de la position de la face par rapport au moyen d'acquisition d'images par un traitement desdites images est réalisée par acquisition d'une image du sujet portant un dispositif muni d'au moins trois marqueurs de référence.

Dans un deuxième aspect non revendiqué un procédé de détermination du plan de Francfort d'un sujet comprend :
- pour chaque œil du sujet, détermination de la position d'un point remarquable virtuel de l'œil par application du procédé précédent ;
- détermination de la position du point sous-orbitaire de chaque œil par une relation géométrique prédéterminée avec le point remarquable virtuel dudit œil ;
- détermination de la position du tragion du sujet sur au moins une des images prises lors de l'étape de détermination du point remarquable virtuel ;
- détermination du plan de Francfort à partir de la position du tragion et des points sous-orbitaires.

### Description sommaire des dessins

L'invention sera mieux comprise à la lecture de la description qui suit, faite uniquement à titre d'exemple, et en référence aux figures en annexe dans lesquelles :
- la figure 1 est une vue de face des rectangles englobant des verres correcteurs, avec le regard de face ;
- la figure 2 est une vue de trois quarts de face des rectangles englobant des verres correcteurs, avec le regard oblique ;
- la figure 3 est une vue générale d'un équipement selon un mode de réalisation de l'invention ;
- la figure 4 est une vue de trois-quarts de face d'un accessoire de type clip pour la mise en œuvre d'un mode de réalisation de l'invention ;
- la figure 5 représente un modèle de l'œil fixant une cible ;
- la figure 6 est une vue schématique d'un visage avec détermination du plan de Francfort avec saisie d'un seul point sur l'image de trois-quarts ; et
- la figure 7 est une vue schématique de dessus du tracé du tragion.

### Manière(s) de réaliser l'invention

On entend par « point remarquable virtuel (PRV) » un point qui n'est visible que sur une image au plus obtenue par des moyens d'acquisition d'image, et qui présente un intérêt pour les mesures réalisées dans le cadre de la fabrication de verres correcteurs personnalisés et/ou au montage de verres correcteurs. Dans le mode de réalisation revendiqué, le point remarquable virtuel PRV est :
- le centre de rotation de l'œil CRO ;

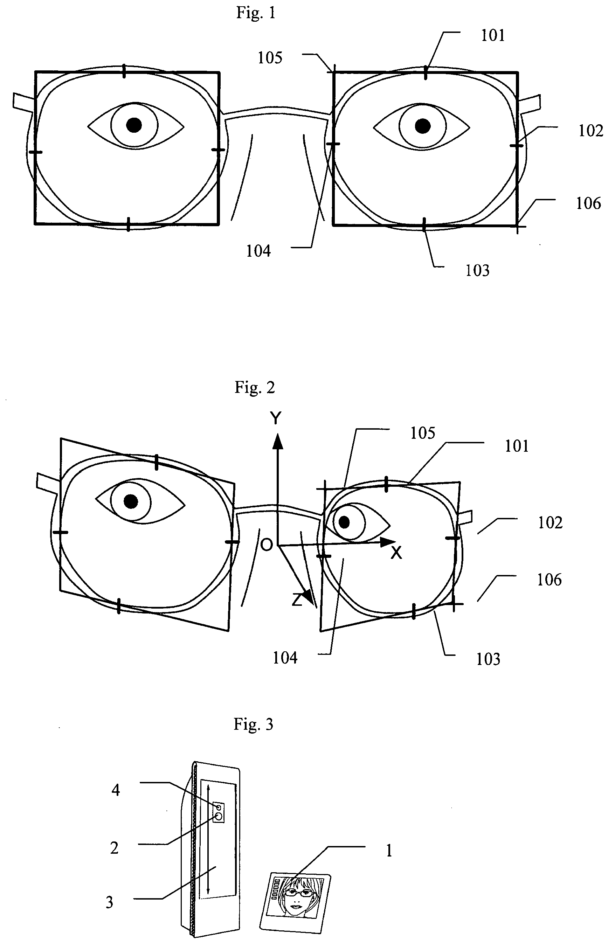

Dans des variantes non revendiquées, le point remarquable virtuel PRV est
- un des sommets du rectangle englobant du verre (« rectangle boxing »). Le rectangle boxing correspond au rectangle englobant de la découpe extérieure d'un des deux verres correcteurs. Comme la monture et le verre ne sont généralement pas plans, ce rectangle englobant est assimilé au rectangle englobant de la projection de la découpe extérieure du verre sur le plan moyen du verre (voir figures 1 et 2) ; et/ou
- le tragion de l'oreille lorsqu'il n'a pas au moins pu être identifié correctement sur deux images.

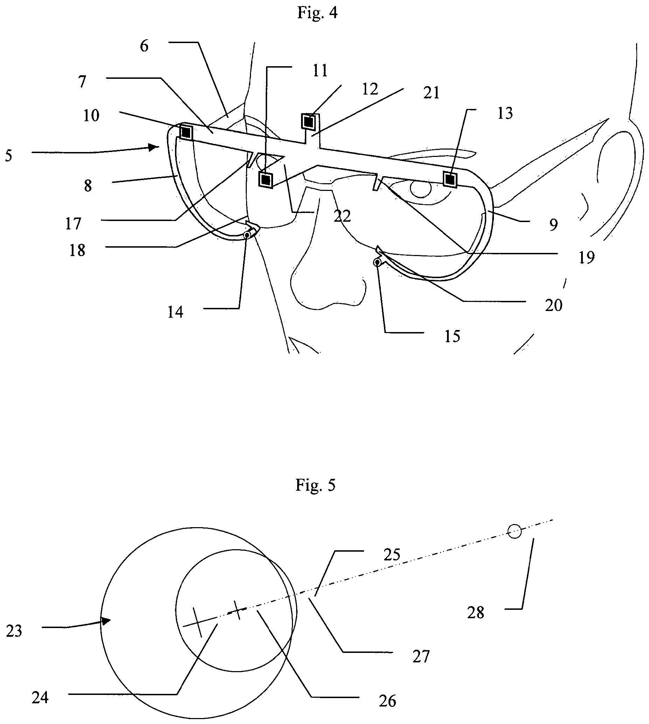

En référence à la figure 3, un équipement de détermination d'un PRV comprend :
- un écran d'affichage 1 à rayons cathodiques ou à cristaux liquides ;
- un dispositif de prise de vues 2 du type à prises de vues ponctuelles ou de prise d'images animées. Il s'agit généralement d'une caméra numérique ou, selon une variante particulière, d'une caméra analogique associée à un circuit d'acquisition et de traitement vidéo ;
- un dispositif de visée constitué dans l'exemple de mise en œuvre décrit d'un miroir sans tain 3. Ce dispositif est destiné à fournir un point de fixation (PF) au porteur ;
- un dispositif d'éclairage 4 destiné à éclairer la face du porteur, notamment pour former un reflet sur la cornée des yeux dudit porteur ;
- un dispositif tel que l'accessoire 5 de la figure 4 destiné à positionner la tête du porteur, la monture de lunette ou les verres correcteurs ;
- une unité centrale ; et
- des moyens de commandes du système (clavier souris, écran tactile, boutons...).

Le dispositif de prise de vues 2 est relié à l'unité centrale par l'intermédiaire d'une interface appropriée d'acquisition vidéo et de contrôle de la caméra, qui pilote l'écran via un circuit de sortie vidéo. L'utilisateur, généralement un opticien, peut commander le système, par exemple au moyen d'un clavier, d'une souris, d'une interface tactile sur l'écran, etc.

Le porteur de verres optiques se place devant la caméra 2, le miroir 3 est placé face au porteur et soit juste devant la caméra 2 s'il s'agit d'un miroir sans tain, soit juste en dessous s'il s'agit d'un miroir classique, de telle sorte que le porteur puisse orienter son regard vers le reflet d'un point de son visage dans le miroir 3 lors de l'acquisition des images (il regarde par exemple le milieu du pont de la monture ou le milieu de son nez). Le miroir 3 permet ainsi de simuler un point de fixation (PF) deux fois plus loin que le dispositif, ce qui est avantageux pour faire des mesures en position « vision de loin » tout en gardant le dispositif relativement proche du porteur. De plus, un calcul différentiel montre que, avantageusement, les erreurs sur la mesure du CRO dues à une mauvaise convergence du regard seront deux fois moindres dans cette situation (regard convergent vers un reflet dans un miroir) que dans la situation ou on demande au porteur de regarder la pupille d'entrée de la caméra.

Avantageusement, le dispositif de visée comprend un miroir sans tain, placé sur le bâti face au porteur de lunettes, derrière lequel est positionné, dans une cavité prévue à cet effet, le dispositif de prise de vues 2. Le dispositif peut comprendre alors des moyens de déplacement en hauteur, motorisés ou manuels, afin d'ajuster la hauteur du dispositif de prise de vues 2 pour le placer au niveau du regard du porteur de lunettes.

Un dispositif d'éclairage 4 optionnel, dans l'exemple décrit une diode électroluminescente, est disposé au-dessus de la caméra. Il est destiné à former une image sur la cornée, représentant un ou plusieurs points de référence de l'œil, appelé reflet cornéen (RC), visible sur l'image capturée par la caméra. Une alternative à ce dispositif est de mesurer la position de la pupille et éventuellement sa taille et sa forme sur l'image.

Le dispositif de prise de vues 2 peut être également portable. Ainsi, l'opérateur peut-il aisément réaliser les prises de vues en se positionnant face au visage du sujet, afin de réaliser les prises de vue nécessaires. Le dispositif de visée peut alors être par exemple un miroir classique placé juste au-dessous du dispositif de prise de vues 2.

Selon une forme de réalisation particulièrement simple et économique, le dispositif de prise de vues 2 peut être un simple appareil photographique, prenant successivement deux images ou plus.

Il peut s'agir également d'une caméra vidéo, enregistrant les première et deuxième prises de vue, ainsi que tout ou partie du mouvement réalisé par le porteur lors du balayage à rotation autour de l'axe vertical. La sélection des première et deuxième vues optimales parmi la pluralité de vues prises par la caméra peut alors être réalisée, par exemple, selon le procédé décrit dans le document FR 2 860 887 au nom de la Demanderesse.

La mise en œuvre de l'équipement s'effectue alors de la manière suivante.

Le porteur est équipé d'une monture 6 sur laquelle est placé un accessoire de type clip 5, dont la figure 4 représente un exemple de réalisation.

Cet accessoire 5 est destiné à être solidarisé de la tête du porteur de lunettes.

L'accessoire 5 est réalisé par exemple en matière plastique transparente, comprend un corps principal 7 formé par une poutre allongée horizontalement et deux tiges courbes 8, 9 flexibles. L'accessoire 5 comporte un certain nombre de repères visuels, ou marqueurs 10 à 13, de préférence au moins trois.

Dans l'exemple décrit, l'accessoire 5 comprend quatre zones marqueurs hauts 10 à 13 d'une couleur de spectre bien identifié, par exemple un vert vif, et deux autres marqueurs bas 14, 15 de forme et couleur préférablement distinctes de celle des marqueurs hauts 10 à 13.

Il comprend en outre, deux ensembles de fixation sur la monture, formée par une première paire de pinces 17, 18, et une deuxième paire de pinces 19, 20 pour accrocher l'accessoire 5 sur la monture 6.

De la sorte, une fois que le porteur a mis ses lunettes (correctrices ou optiquement neutres, ou encore nues) dans une position bien stable, et que l'accessoire 5 a été mis en place sur la monture 6, il occupe une position bien définie et fixe par rapport à la monture 6 et à la tête du porteur.

En effet, les quatre crochets 17 à 20 définissent des points d'appuis connus par rapport aux marqueurs 10 à 15, qui vont se placer en des points caractéristiques du verre.

L'accessoire 5 comprend en outre, à partir du milieu du corps principal 7, une branche 21 qui s'étend verticalement et une partie en saillie 22 qui s'étend horizontalement, de manière sensiblement perpendiculaire au corps 7. Deux marqueurs 11, 12 des quatre marqueurs du corps principal 7 se situent alors respectivement au niveau de l'extrémité libre de la partie en saillie 22 et de la branche verticale 21.

Les deux marqueurs 10 et 13 se trouvent à gauche et à droite. Les deux derniers marqueurs 14, 15, quant à eux, se trouvent juste au-dessous des crochets du bas 17, 20.

Bien entendu, tout autre agencement de marqueurs, le cas échéant plus ou moins nombreux, peut être utilisé en fonction notamment des types de mouvements dont l'analyse est à privilégier, de la précision souhaitée et des éventuelles ambiguïtés à résoudre lorsque les marqueurs sont trop peu nombreux et/ou trop uniformément espacés.

L'équipement prend alors deux images du sujet portant ses lunettes avec cet accessoire.

Le dispositif de prise de vues 2 réalise tout d'abord une première prise de vue (image 1) du visage du porteur de lunettes, sur laquelle le porteur fixe un point de fixation (PF), de préférence face à lui. Le point de fixation est par exemple le reflet dans le miroir du milieu du pont de la monture. De part la réalisation de l'équipement, et en particulier l'utilisation d'un miroir sans tain 3, le porteur ne fixe pas l'axe de l'objectif du dispositif de prise de vues 2.

Dans un deuxième temps, l'opticien demande au porteur de tourner la tête autour d'un axe vertical, tout en continuant de fixer le point de fixation PF, selon un angle α de préférence compris entre 10° et 30° par rapport à la première prise de vue (image 1), plus préférentiellement entre 15° et 25° par rapport à la première prise de vue (image 1). Le sujet porte alors toujours l'accessoire comprenant les marqueurs 10 à 15. Le dispositif de prise de vues 2 réalise alors une deuxième prise de vue (image 2).

Avantageusement, les deux images peuvent être choisies dans une même séquence vidéo : pendant l'enregistrement de la vidéo le porteur se regarde naturellement de face en position de vision de loin, puis tourne la tête autour d'un axe vertical.

Avantageusement, l'une des deux prises de vues correspond à une position de référence pour les mesures concernant la personnalisation de verres ou le montage des lunettes, comme la position en vision de loin ou la position en vision de près. Elle permet alors à l'équipement de déterminer la position et l'inclinaison de la tête du porteur selon les six axes de liberté possibles lorsque le porteur est en position de vision de loin (ou en vision de près selon la position de référence choisie).

Une utilisation de l'équipement va maintenant être décrite pour la détermination de la position du Centre de Rotation de l'œil (CRO).

On repère (automatiquement ou manuellement) la position des points de référence sur chacune des deux images prises selon le protocole décrit précédemment. Les points de référence dans cette mise en œuvre sont les reflets cornéens pour les mesures liées au centre de rotation de l'œil.

Le centre de rotation de l'œil n'étant pas visibles sur l'image, on utilise des points visibles sur l'image dit points de référence PRef (ici le reflet cornéen) ainsi qu'un modèle mettant en relation la position des points de référence PRef avec la position 3D des points virtuels. Par exemple cette relation notée RPRV, PRef sera sous la forme d'une fonction logicielle dite fonction de projection FPRV donnant la position sur l'image d'un point de référence PRef en fonction de la position 3D d'un point remarquable virtuel PRV.

La fonction de projection FPRV est donc une fonction qui a comme paramètre d'entrée le CRO et qui en déduit la position des points de référence PRef sur les images.

Elle utilise un modèle 23 de l'œil fixant une cible, représenté sur la figure 5, comportant les paramètres suivants :
- Un rayon de l'œil (RO) indiquant la distance entre le centre de rotation de l'œil (CRO) 24 et le bord de la cornée 25, mesurée dans l'axe du regard ;
- La distance (DeltaC) entre le CRO et le centre du rayon de courbure de la cornée 26 ; et
- Le rayon de courbure de la cornée (RCC) étant la distance entre le centre de rayon de courbure de la cornée 26 et le bord de la cornée 25.

Ces paramètres peuvent être définis par des valeurs moyennes mesurées sur des échantillons de sujet. Typiquement, RO vaut 13 mm, DeltaC 5 mm et RCC 8 mm. Les valeurs réelles du modèle 23 peuvent fluctuer d'un individu à l'autre, mais l'utilisation de valeurs moyennes n'influence que très faiblement les résultats.

L'axe du regard est défini par la droite reliant le CRO 24 et le centre de rayon de courbure de la cornée 26, ce dernier pouvant être déduit du rayon de courbure de la cornée (RCC) et des positions par rapport à la caméra du reflet cornéen RC et du dispositif d'éclairage (4).

Alternativement au reflet cornéen (RC) il est possible de prendre le centre de la pupille (27) comme point de référence (PRef). L'axe du regard est alors défini par la droite reliant le CRO (24) et le centre de la pupille de l'œil (27).

Lorsque l'œil dirige son regard vers un point de fixation (PF) 28, les points 24, 26, 27 et 28 sont alignés.

A partir de la position du CRO et de celle du porteur, on calcule la direction du regard. Comme le porteur se regarde dans le miroir, la direction du regard peut-être calculée grâce à la position du point de fixation PF, car il est lui-même déduit en fonction de la position de la caméra et du porteur. Le point de fixation PF est alors le symétrique du point regardé (par exemple le milieu du pont de la monture calculé grâce à la position de l'accessoire 5) par rapport au plan du miroir. La direction du regard est donc le vecteur défini par le couple ordonné (CRO, PF). Il est possible, dans une variante de l'invention, d'utiliser plusieurs points remarquables de l'œil, préférablement à des distances différentes du CRO pour calculer la direction du regard. Ces points pourraient être une combinaison de points choisis parmi ceux de l'image de la pupille de l'œil, de l'iris et du reflet cornéen.

A partir du CRO et de la direction du regard, on calcule la position du centre de rayon de courbure de la cornée (CRCC).

A partir du CRCC, du rayon de courbure de la cornée RCC et de la position connue par rapport à la caméra du dispositif d'éclairage LED, il est possible d'appliquer la loi de Snell-Descartes pour la réflexion d'un rayon lumineux sur une surface réfléchissante et ainsi projeter le reflet cornéen sur l'image qui définit un point de référence PRef.

La fonction FPRV permettant de connaître les positions 2D du point de référence PRef sur les images en fonction de la position 3D du point virtuel ne possède pas de fonction inverse facile à calculer analytiquement et permettant d'obtenir le CRO à partir des points de référence. Une des raisons de cette difficulté est que le reflet cornéen (RC) et la pupille se sont déplacés par rapport à la tête du porteur entre chaque prise de vue et ont donc des coordonnées tridimensionnelles dans le repère spatial (RS) qui diffèrent pour chaque image image 1 et image 2. En conséquence, d'autres méthodes qu'un calcul direct sont utilisées pour obtenir la position du CRO à partir des points de référence PRef. Il est par exemple possible d'utiliser des itérations successives recherchant le positionnement CRO par optimisation.

De nombreuses méthodes d'optimisation connues dans l'état de la technique peuvent être appliquées pour optimiser la position 3D du point remarquable virtuel PRV en minimisant l'erreur de projection. On peut par exemple définir une fonction FOPT à optimiser, prenant comme paramètre un point 3D PRV retournant la somme SDDeltaPRef des distances sur chaque image (image 1 et image 2) entre le ou les points de référence Pref observés sur l'image et le point projeté par la fonction de projection FPRV à partir de la position supposée du point remarquable virtuel PRV. Nous présentons ici une mise en œuvre simple mais efficace de la méthode de la descente de gradient consistant à réaliser les étapes suivantes :
- initialiser la position du point remarquable virtuel PRV à une position PRVinitial probable et proche de la valeur finale afin d'éviter tout minima local. Pour cela il est possible de prendre pour départ la position dans l'espace du point le plus proche des deux droites d'observation (DO1 et DO2) formées par le centre optique de la caméra et la position du point de référence PRef sur chaque image (image 1 et image 2), ces points PRef étant ici les reflets cornéens observés sur les images (image 1 et image 2). La position du CRO PRVinitial obtenue sera la première position courante du CRO PRVcourant lors du calcul itératif de l'optimisation
- répéter par itération les sous-étapes suivantes :
   - calculer la fonction FOPT appliquée au point courant PRVcourant. Cela revient à effectuer les sous-étapes :
      - calculer pour chacune des images (image 1 et image 2) la position du point de référence théorique PRefthéorique comme étant la projection du point courant PRVcourant en y appliquant la fonction de projection FPRV.
      - calculer la somme SDDeltaPRef des distances obtenues pour chacune des images (image 1 et image 2) entre le point de référence PRef observé sur l'image et le point calculé par projection PRefthéorique
   - lorsque la somme des distances SDDeltaPRef est inférieure à un seuil prédéfini arrêter les itérations, sinon :
      - estimer le vecteur gradient de la fonction FOPT à la position courante du CRO PRVcourant en faisant fluctuer légèrement la position courante PRVcourant selon ses degrés de liberté (3 degrés dan le cas d'un point 3D), par exemple en ajoutant une valeur très inférieure à la précision de la mesure finale successivement à chacune des coordonnées XPRV, YPRV puis ZPRV pour calculer une dérivée pour chacune des coordonnées XPRV, YPRV, ZPRV du point CRO courant PRVcourant, ces dérivées formant le vecteur gradient à trois dimensions DFPRV de la fonction de projection FPRV au point courant PRVcourant.
      - soustraire le vecteur gradient DFPRV au point courant PRVcourant pour obtenir la position courante PRVcourant de la prochaine itération.

Cette méthode d'optimisation n'est bien sûre pas limitative et l'homme du métier pourra, si besoin est, l'adapter en fonction des situations rencontrées en faisant appel à l'état de la technique relative à l'optimisation multiparamétrique de manière à par exemple optimiser la vitesse de convergence de l'algorithme (par exemple ajustement dynamique des coefficients de convergence) ou éviter un minima local (par exemple par recuit simulé).

En particulier, pour réaliser l'optimisation de la position du CRO, il est avantageux d'utiliser une autre méthode qui s'avère efficace pour son bon rapport précision/coût de calcul. Cette méthode consiste dans les étapes suivantes :
- On initialise la position du point virtuel à une position probable. Pour le CRO on peut prendre par exemple une position par défaut correspondant à des valeurs moyennes pour l'écart pupillaire, la hauteur et la distance verre-œil. Il est possible également de prendre pour départ la position dans l'espace du point le plus proche des deux droites formées par le centre optique de la caméra et le centre du reflet cornéen sur chaque image. La position CRO obtenue sera la première position courante du CRO lors du calcul itératif qui suit.

- On réalise l'itération suivante jusqu'à obtention de la précision de positionnement voulu :
   - A l'aide de la fonction de projection on calcule la position du reflet sur chaque image pRC.
   - On calcule sur chaque image la distance entre la position calculée et la position observée. Si la distance maximum entre les deux images est très inférieure à la précision de positionnement du reflet cornéen observé sur l'image, on arrête l'optimisation et on garde la position courante du CRO.
   - On projette sur chaque image la position courante du CRO sur l'image pCRO. On obtient pour chaque image un vecteur de translation (pRC, pCRO) représentant le décalage entre le CRO et le reflet cornéen.
   - On translate sur chaque image le reflet cornéen observé avec (pRC, pCRO). On obtient sur chaque image la projection du CRO de la prochaine itération.
   - On calcule la position 3D du CRO à l'aide des 2 projections.

La fonction de projection n'est pas limitée à une projection sur l'image, car si le point remarquable ou tout point intermédiaire peut être positionné en 3D l'optimisation peut-être faite sur une distance 3D.

Inversement, dans certaines situations la relation RPRV, PRef retenue peut donner une estimation satisfaisante de la position du point remarquable virtuel PRV en fonction de la position du point de référence PRef, par exemple la position du point remarquable virtuel PRV projetée sur l'image (image 1 ou image 2) du point remarquable virtuel PRV en fonction de la position sur cette même image du point de référence PRef associée la position du porteur par rapport à la caméra, indiquant notamment la distance du porteur par rapport à la caméra et la direction de son regard. Le point bidimensionnel PRef associé à la distance du porteur par rapport à la caméra apporte ainsi une approximation tridimensionnelle de la position de ce point de référence PRef. Les projections des points PRV obtenus avec la relation RPRV, PRef peuvent alors définir deux nouvelles droites d'observation (DO1 et DO2) respectivement pour chaque image (image 1 et image 2) la position du point remarquable virtuel PRV dans le référentiel voulu étant la position du point d'intersection ou, si ces droites ne sont pas rigoureusement sécantes, de plus grande proximité des deux droites d'observation (D01 et D02).

En utilisant une troisième prise de vue (image 3) et la mesure du centre de rotation de l'œil CRO déjà réalisée avec deux images, l'invention permet également de mesurer le rayon de l'œil. Lors de la troisième prise de vue (image 3) le sujet fixe une cible dont la position est connue ou peut être estimée par rapport à la caméra et préférablement placée de tel manière que l'angle formé par la direction du regard par rapport à l'axe entre le CRO et le centre optique de la caméra, soit sensiblement différent de ce même angle lors des deux autres prises de vues (images 1 et images 2). Une méthode possible pour calculer le rayon de l'œil est d'utiliser l'une des deux méthodes d'optimisations présentées précédemment et de l'appliquer aux trois images. Le rayon de l'œil, qui était précédemment une constante du modèle de l'œil utilisé pour la fonction de projection FPRV, devient ici un paramètre supplémentaire à optimiser.

Une variante de l'invention est de combiner plusieurs points remarquables virtuels et/ou plusieurs points de références. Une fois la position d'un PRV mesuré avec la présente invention, il peut facilement être utilisé comme un point de référence pour mesurer, à l'aide d'une autre relation (RPRV, PRef), la position d'un autre PRV, soit directement soit en combinaison avec d'autres PRef. Cette variante permet par exemple de mesurer le plan de Francfort relatif au sujet.

Afin de faciliter l'acquisition des mesures avec un équipement portatif par exemple, une solution avantageuse consiste à prendre en compte un plan morphologique remarquable, à savoir le plan de Francfort.

Le plan de Francfort est défini comme étant le plan passant par les points sous-orbitaires et le porion, le porion étant le point du crâne le plus élevé du conduit auditif.

Il est communément admis que ce plan est horizontal lorsque le sujet, se tenant droit, regarde droit devant à la hauteur de ces yeux. Cette posture étant la position de référence pour les mesures de « vision de loin » il est très avantageux de pouvoir mesurer la position du plan de Francfort par rapport à un plan horizontal. En effet, avec la mesure du plan de Francfort et la position du CRO il est possible de calculer la direction du regard par rapport au verre de lunette ou la monture, pour une posture et un point de fixation donné, ce qui permet de calculer les mesures de « vision de loin », même si le sujet n'avait pas une posture de vision de loin lors de la prise de mesure. En effet, il est souvent moins précis de mesurer la position réelle du sujet en vision de loin plutôt que d'utiliser le plan de Francfort, car le sujet peut ne pas avoir une position naturelle lors de la prise de mesure. Cela se produit notamment lorsque le sujet est stressé, ou ne comprend pas bien l'importance des indications de l'opticien ou bien encore s'il est influencé par le dispositif de visée, c'est-à-dire s'il na pas une posture libre lorsqu'il regarde une LED ou lorsqu'il se regarde dans un miroir. Il revient alors à l'expertise de l'opticien de décider s'il faut retenir comme référence d'horizontalité, pour les mesures de « vision de loin », soit le port de tête mesuré, soit le plan de Francfort.

Par ailleurs, il peut être avantageux avec l'utilisation d'un dispositif économique de type portable de ne pas à avoir à contrôler l'horizontalité par rapport à la caméra. Le plan de Francfort serait alors la référence pour le port de tête en « vision de loin ».

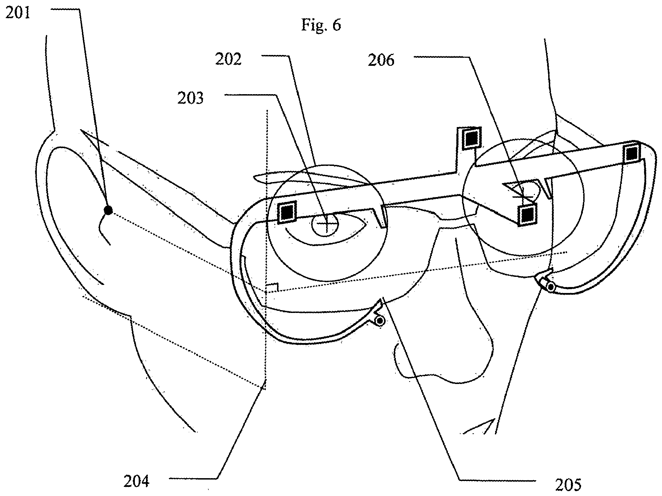

La figure 6 représente une vue schématique d'un visage avec détermination d'une bonne approximation du plan de Francfort (APF) avec saisie d'un seul point sur l'image de trois quart(point 201), approximation définie dans les lignes ci-dessous.

Le plan du tragion 204 est perpendiculaire à l'axe passant par les centres de rotation de l'œil 203, 206 et qui passe par le bord temporal extrême des orbites oculaires 202.

Le plan de Francfort 205 est défini par les tragions 201 et le bas des orbites oculaires 202.

Le plan de Francfort à historiquement été mesuré sur des crânes en anthropologie puis sur des radiographies notamment en dentaire, où les sphères orbitales et les porions sont visibles.

Afin de déterminer le plan de Francfort de façon simple sur une personne vivante, sans faire appel à la radiographie pour déterminer la position du porion, ni faire appel à la palpation pour déterminer la position du point sous-orbitaire, l'approximation APF du plan de Francfort peut être utilisée : cette approximation du plan de Francfort est définie comme le plan passant par le tragion de l'oreille, visible sur l'image de trois quart, parallèle à la droite ACRO passant par les deux CRO, et situé à une distance connue DPF de cet axe ACRO.

La distance DPF, d'environ 22 millimètres, pourra être ajustée d'abord avec les connaissances disponibles sur l'anatomie humaine puis expérimentalement de manière à optimiser les résultats de mesure. L'approximation APF du plan de Francfort est ainsi tangente au cylindre CYPF défini par l'ensemble des points étant à la distance DPF de l'axe ACRO. Ensuite on place manuellement, automatiquement ou d'une manière semi-assistée la position d'au moins un tragion sur au moins deux images du visage du sujet portant l'accessoire 5. Les points du tragion étant des points de références (visibles) et le tragion TG étant immobiles dans le repère de l'accessoire 5, il peut être positionné en 3D comme étant l'intersection des deux droites d'observation D01 et D02. Le plan de Francfort peut alors facilement être calculé comme étant le plan contenant le point TG et tangent au cylindre CYPF. Il sera évidemment possible d'ajuster ce modèle de calcul lors de mesure expérimentales par exemple en modifiant la valeur DPF ou en ajoutant une constante à l'inclinaison par rapport à l'horizontale du plan obtenu.

Il reste un inconvénient à cette approche : il est important pour l'opticien que la prise de mesure soit rapide (pour ne pas faire patienter ses clients), simple et avec un minimum d'interventions manuelles pour minimiser les risques d'erreurs. Or sur les 2 images déjà prises pour les autres mesures, une est de face (la position de vision de loin) et pour de nombreux sujets se présentant de face les tragions ne sont pas visibles où mal positionnable. Par contre un tragion est bien visible sur la vue de 3/4. Cependant là encore le CRO permet de placer un point non visible sur l'image. En effet le porion est situé sur un plan perpendiculaire à l'axe ACRO à une distance DTG fixe dont la valeur pourra être optimisée expérimentalement mais que les connaissances sur l'anatomie humaine permettent d'estimer à 18mm. Lorsque le sujet à un port de tête relativement horizontal (plus ou moins 10° par rapport plan de Francfort), même des valeurs approximatives pour la distance DTG permettent d'avoir une mesure de l'inclinaison du plan de Francfort précise (environ au degré près ou mieux).

Lorsque le CRO n'est pas mesuré il est tout de même possible d'utiliser le centre des pupilles ou le reflet cornéen, ces derniers étant sensiblement à la même hauteur que le CRO lorsque le port de tête du sujet est proche de la position de vision de loin, c'est-à-dire lorsque le plan de Francfort est proche de l'horizontale.

Dans le cas où le CRO ou le tragion sont mal définis, il est également possible d'estimer le plan de Francfort en remplaçant le CRO ou le tragion par les coordonnées d'un autre point morphologique remarquable de l'œil ou du visage comme le point sous-nasal ou en combinant ces informations.

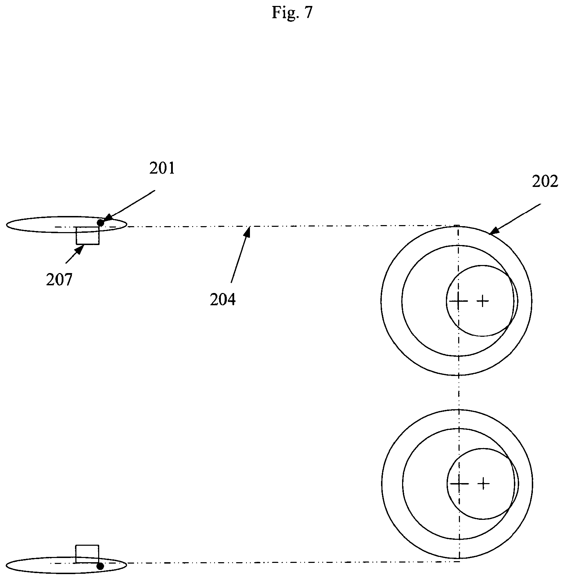

La figure 7 représente une vue schématique de dessus du tracé du plan du tragion 204 contenant le tragion 201 et positionné par rapport à la position du conduit auditif 207 et des orbites oculaires 202.

L'invention est adaptée pour la détermination de points remarquables de type anatomiques, tels que le centre de rotation de l'œil, le point sous-orbitale permettant de définir le plan de Francfort et le tragion lorsqu'il n'est pas visible sur les deux images. Elle est également adaptée pour la détermination de points remarquables liés à la monture et notamment les sommets des points englobant du verre correcteur

L'invention a été illustrée et décrite en détail dans les dessins et la description précédente. Celle-ci doit être considérée comme illustrative et donnée à titre d'exemple et non comme limitant l'invention a cette seule description.

Dans les revendications, le mot « comprenant » n'exclue pas d'autres éléments et l'article indéfini « un/une » n'exclue pas une pluralité.

## Revendications

1. Procédé de mesure de la position d'un point remarquable virtuel (PRV) correspondant au centre de rotation de l'œil (CRO) dans un repère spatial lié à la tête du sujet, ledit procédé comportant :
• une étape d'acquisition d'au moins deux images de tout ou partie de la face du sujet par un moyen d'acquisition d'images (2) ayant un centre optique, les images étant acquises dans des situations correspondant à des angles de vision/tête distincts et telles que la direction du regard passe par le centre optique du moyen d'acquisition d'images dans au plus une image, le sujet regardant un point de fixation (PF) généré par un dispositif ;
• une étape d'estimation de la position de la face par rapport au moyen d'acquisition d'images par un traitement desdites images ;
• une étape de détermination, sur lesdites images, des coordonnées (Xpref, Ypref) d'un ou plusieurs points de référence (PRef) constitués par un reflet cornéen (RC) causé par au moins une source externe ou par le centre de la pupille ;
**caractérisé en ce que**, le point remarquable virtuel (PRV) étant visible sur au plus l'image dans laquelle la direction du regard passe par le centre optique du moyen d'acquisition d'images et la position du point remarquable virtuel (PRV) étant reliée par une relation géométrique prédéterminée avec les coordonnées du ou des points de référence (PRef) selon une modélisation géométriques (23) de l'œil fixant une cible, et
**en ce que** ledit procédé de mesure comporte en outre une étape d'optimisation d'au moins une des coordonnées (XPRV, YPRV, ZPRV) du point remarquable virtuel (PRV) dans le repère spatial à partir des coordonnées déterminées du ou des points de référence PRef en utilisant la relation géométrique.

2. Procédé selon la revendication 1, **caractérisé en ce que** lesdits points de référence PRef de la relation géométrique varient dans le repère spatial de l'acquisition d'une image à l'autre.

3. Procédé selon l'une quelconque des revendications précédentes, **caractérisé en ce que** l'étape de calcul d'au moins une des coordonnées (XPRV, YPRV, ZPRV) du point remarquable virtuel (PRV) consiste à :
• émettre une hypothèse initiale d'un point remarquable virtuel théorique (PRVinitial) sur l'une au moins desdites coordonnées (XPRV, YPRV, ZPRV) ;
• calculer un point de référence théorique (PRefthéorique) en utilisant la relation géométrique ;
• si la distance entre le point de référence théorique (PRefthéorique) et le point de référence observé (PRef) est supérieure à une valeur prédéterminée, modifier au moins une fois ladite hypothèse pour minimiser ladite distance.

4. Procédé selon l'une au moins des revendications précédentes, **caractérisé en ce que** pendant l'acquisition d'images, le sujet regarde un point de fixation (PF) générée par un dispositif, la distance optique entre l'œil du sujet et le point de fixation (PF) étant différente de la distance optique entre l'œil du sujet et le moyen d'acquisition (2).

5. Procédé selon la revendication 4, **caractérisé en ce que** le sujet regarde son reflet pendant l'acquisition d'images grâce à un miroir (3).

6. Procédé selon l'une au moins des revendications précédentes, **caractérisé en ce que** le moyen d'acquisition d'images (2) est constitué par une caméra procédant à l'enregistrement d'une séquence d'images.

7. Procédé selon l'une au moins des revendications précédentes, **caractérisé en ce que** l'enregistrement des images est effectué au moment où le sujet regarde un point de fixation (PF) dont la position est connue par rapport au moyen d'acquisition d'images (2).

8. Procédé selon l'une au moins des revendications précédentes, **caractérisé en ce qu'**il comporte en outre une étape d'estimation de la direction du regard prenant en compte au moins deux points caractéristiques de l'œil sur lesdites images.

9. Procédé selon l'une au moins des revendications précédentes, **caractérisé en ce que**, le moyen d'acquisition (2) comportant au moins deux dispositifs de prise d'image, l'étape d'estimation de la position de la face par rapport au moyen d'acquisition d'images est réalisée par traitement d'une série d'images acquises simultanément.

10. Procédé selon l'une au moins des revendications précédentes **caractérisé en ce que** l'étape d'estimation de la position de la face par rapport au moyen d'acquisition d'images (2) par un traitement desdites images est réalisée par acquisition d'une image du sujet portant un dispositif muni d'au moins trois marqueurs de référence (10,11,12,13,14,15).

11. Système de mesure de la position d'un point remarquable virtuel (PRV) adapté à la mise en œuvre du procédé selon l'une quelconque des revendications précédentes, ledit système comportant :
• un moyen d'acquisition (2) d'au moins deux images de tout ou partie de la face du sujet, le moyen d'acquisition (2) ayant un centre optique ;
• un calculateur de la position de la face par rapport au moyen d'acquisition d'images par un traitement desdites images ;
• un moyen de détermination, sur lesdites images, des coordonnées (Xpref, Ypref) d'un ou plusieurs points de référence (PRef) constitués par un reflet cornéen (RC) causé par au moins une source externe ou par le centre de la pupille ;
• un calculateur d'au moins une des coordonnées (XPRV, YPRV, ZPRV) du point remarquable virtuel (PRV) par optimisation dans le repère spatial à partir des coordonnées déterminées du ou des points de référence (PRef) en utilisant la relation géométrique.

12. Produit programme d'ordinateur comprenant des instructions de code de programme enregistré sur un support lisible par un ordinateur, pour permettre au système de la revendication 11 de mettre en œuvre les étapes du procédé selon l'une quelconque des revendications 1 à 10 lorsque ledit programme fonctionne sur un ordinateur.

## Patentansprüche

1. Verfahren zur Messung der Position eines virtuellen Kennpunkts (PRV) entsprechend dem Drehpunkt des Auges (CRO) in einem mit dem Kopf der Person verbundenen räumlichen Bezugssystem, wobei das Verfahren aufweist:
• einen Schritt der Erfassung von mindestens zwei Bildern des ganzen oder eines Teils des Gesichts der Person durch eine Bilderfassungseinrichtung (2), die ein optisches Zentrum hat, wobei die Bilder in Situationen erfasst werden, die unterschiedlichen Blick-/Kopfwinkeln entsprechen und so sind, dass die Blickrichtung in höchstens einem Bild durch das optische Zentrum der Bilderfassungseinrichtung geht, wobei die Person einen von einer Vorrichtung erzeugten Fixierpunkt (PF) betrachtet;
• einen Schritt der Schätzung der Position des Gesichts bezüglich der Bilderfassungseinrichtung durch eine Verarbeitung der Bilder;
• einen Schritt der Bestimmung, auf den Bildern, der Koordinaten (Xpref, Ypref) eines oder mehrerer Bezugspunkte (PRef), die aus einem von mindestens einer externen Quelle oder von der Mitte der Pupille verursachten Hornhautreflex (RC) bestehen;
**dadurch gekennzeichnet, dass** der virtuelle Kennpunkt (PRV) auf höchstens dem Bild sichtbar ist, in dem die Blickrichtung durch das optische Zentrum der Bilderfassungseinrichtung geht, und die Position des virtuellen Kennpunkts (PRV) durch eine vorbestimmte geometrische Beziehung mit den Koordinaten des oder der Bezugspunkte (PRef) gemäß einer geometrischen Modellierung (23) des ein Ziel fixierenden Auges verbunden ist, und
dass das Messverfahren außerdem einen Schritt der Optimierung mindestens einer der Koordinaten (XPRV, YPRV, ZPRV) des virtuellen Kennpunkts (PRV) im räumlichen Bezugssystem ausgehend von den bestimmten Koordinaten des oder der Bezugspunkte PRef unter Verwendung der geometrischen Beziehung aufweist.

2. Verfahren nach Anspruch 1, **dadurch gekennzeichnet, dass** die Bezugspunkte PRef der geometrischen Beziehung im räumlichen Bezugssystem von einer Bilderfassung zur anderen variieren.

3. Verfahren nach einem der vorhergehenden Ansprüche, **dadurch gekennzeichnet, dass** der Schritt der Berechnung mindestens einer der Koordinaten (XPRV, YPRV, ZPRV) des virtuellen Kennpunkts (PRV) darin besteht:
• Ausgeben einer ursprünglichen Hypothese eines theoretischen virtuellen Kennpunkts (PRVinitial) auf mindestens einer der Koordinaten (XPRV, YPRV, ZPRV);
• Berechnen eines theoretischen Bezugspunkts (PReftheorique) unter Verwendung der geometrischen Beziehung;
• wenn der Abstand zwischen dem theoretischen Bezugspunkt (PReftheorique) und dem beobachteten Bezugspunkt (PRef) größer ist als ein vorbestimmter Wert, Ändern der Hypothese mindestens einmal, um den Abstand zu minimieren.

4. Verfahren nach mindestens einem der vorhergehenden Ansprüche, **dadurch gekennzeichnet, dass** während der Bilderfassung die Person einen von einer Vorrichtung erzeugten Fixierpunkt (PF) betrachtet, wobei der optische Abstand zwischen dem Auge der Person und dem Fixierpunkt (PF) sich vom optischen Abstand zwischen dem Auge der Person und der Erfassungseinrichtung (2) unterscheidet.

5. Verfahren nach Anspruch 4, **dadurch gekennzeichnet, dass** die Person während der Bilderfassung ihr Spiegelbild mit Hilfe eines Spiegels (3) betrachtet.

6. Verfahren nach mindestens einem der vorhergehenden Ansprüche, **dadurch gekennzeichnet, dass** die Bilderfassungseinrichtung (2) aus einer Kamera besteht, die die Aufzeichnung einer Bildfolge durchführt.

7. Verfahren nach mindestens einem der vorhergehenden Ansprüche, **dadurch gekennzeichnet, dass** die Aufzeichnung der Bilder in dem Moment ausgeführt wird, in dem die Person einen Fixierpunkt (PF) betrachtet, dessen Position bezüglich der Bilderfassungseinrichtung (2) bekannt ist.

8. Verfahren nach mindestens einem der vorhergehenden Ansprüche, **dadurch gekennzeichnet, dass** es außerdem einen Schritt der Schätzung der Blickrichtung unter Berücksichtigung von mindestens zwei charakteristischen Punkten des Auges auf den Bildern aufweist.

9. Verfahren nach mindestens einem der vorhergehenden Ansprüche, **dadurch gekennzeichnet, dass**, da die Erfassungseinrichtung (2) mindestens zwei Bildaufnahmevorrichtungen aufweist, der Schritt der Schätzung der Position des Gesichts bezüglich der Bilderfassungseinrichtung durch Verarbeitung einer Reihe von gleichzeitig erfassten Bildern durchgeführt wird.

10. Verfahren nach mindestens einem der vorhergehenden Ansprüche, **dadurch gekennzeichnet, dass** der Schritt der Schätzung der Position des Gesichts bezüglich der Bilderfassungseinrichtung (2) durch eine Verarbeitung der Bilder durch Erfassung eines Bilds der Person durchgeführt wird, die eine Vorrichtung trägt, die mit mindestens drei Bezugsmarkierungen (10, 11, 12, 13, 14, 15) versehen ist.

11. System zur Messung der Position eines virtuellen Kennpunkts (PRV), das für die Anwendung des Verfahrens nach einem der vorhergehenden Ansprüche geeignet ist, wobei das System aufweist:
• eine Erfassungseinrichtung (2) von mindestens zwei Bildern des ganzen oder eines Teils des Gesichts der Person, wobei die Erfassungseinrichtung (2) ein optisches Zentrum hat;
• einen Rechner der Position des Gesichts bezüglich der Bilderfassungseinrichtung durch eine Verarbeitung der Bilder;
• eine Bestimmungseinrichtung auf den Bildern der Koordinaten (Xpref, Ypref) eines oder mehrerer Bezugspunkte (PRef), die aus einem Hornhautreflex (RC) bestehen, der von mindestens einer externen Quelle oder von der Mitte der Pupille verursacht wird;
• einen Rechner mindestens einer der Koordinaten (XPRV, YPRV, ZPRV) des virtuellen Kennpunkts (PRV) durch Optimierung im räumlichen Bezugssystem ausgehend von den bestimmten Koordinaten des oder der Bezugspunkte (PRef) unter Verwendung der geometrischen Beziehung.

12. Auf einem computerlesbaren Träger gespeichertes Computerprogrammprodukt, das Programmcodeanweisungen enthält, um dem System des Anspruchs 11 zu erlauben, die Schritte des Verfahrens nach einem der Ansprüche 1 bis 10 anzuwenden, wenn das Programm auf einem Computer läuft.

## Claims

1. Method for measuring the position of a virtual notable point (PRV) corresponding to the centre of rotation of the eye (CRO) in a spatial coordinate system linked to the head of the subject, said method comprising:
• a step of acquiring at least two images of all or part of the face of the subject using image acquisition means (2) having an optical centre, the images being acquired in situations corresponding to distinct viewing/head angles and such that the direction of the gaze does passes through the optical centre of the image acquisition means in at least one image, the subject looking at a fixation point (PF) generated by a device;
• a step of estimating the position of the face with respect to the image acquisition means by processing said images;
• a step of determining, in said images, the coordinates (Xpref, Ypref) of one or more reference points (PRef) formed by a corneal reflection (RC)caused by at least one external source or by the centre of the pupil;
**characterized in that**, the virtual notable point (PRV) is visible in at most the image in which the direction of the gaze passes through the optical centre of the image acquisition means and the position of the virtual notable point (PRV) is related by a predetermined geometric relationship to the coordinates of the one or more reference points (PRef) according to a geometric model (23) of the eye fixating a target, and
**in that** said measuring method further comprises a step of optimizing at least one of the coordinates (XPRV, YPRV, ZPRV) of the virtual notable point (PRV) in the spatial coordinate system on the basis of the determined coordinates of the one or more reference points using the geometric relationship.

2. Method according to Claim 1, **characterized in that** the said reference points (PRef) of the geometric relationship vary in the spatial coordinate system of the acquisition from one image to the next.

3. Method according to either one of the preceding claims, **characterized in that** the step of calculating at least one of the coordinates (XPRV, YPRV, ZPRV) of the virtual notable point (PRV) consists in:
• issuing an initial hypothesis of a theoretical virtual notable point (PRVinitial) on at least one of said coordinates (XPRV, YPRV, ZPRV);
• calculating a theoretical reference point (PReftheoretical) using the geometric relationship;
• if the distance between the theoretical reference point (PReftheoretical) and the observed reference point (PRef) is greater than a predetermined value, modifying said assumption at least once so as to minimize said distance.

4. Method according to at least one of the preceding claims, **characterized in that** during the image acquisition, the subject looks at a fixation point (PF) generated by a device, the optical distance between the eye of the subject and the fixation point (PF) being different from the optical distance between the eye of the subject and the acquisition means (2).

5. Method according to Claim 4, **characterized in that** the subject looks at their reflection during the image acquisition using a mirror (3).

6. Method according to at least one of the preceding claims, **characterized in that** the image acquisition means (2) consists of a camera recording a sequence of images.

7. Method according to at least one of the preceding claims, **characterized in that** the recording of the images is performed when the subject is looking at a fixation point (PF) the position of which is known with respect to the image acquisition means (2).

8. Method according to at least one of the preceding claims, **characterized in that** it further comprises a step of estimating the direction of the gaze taking into account at least two characteristic points of the eye in said images.

9. Method according to at least one of the preceding claims, **characterized in that**, the acquisition means (2) comprising at least two image capture devices, the step of estimating the position of the face with respect to the image acquisition means is performed by processing a series of images acquired simultaneously.

10. Method according to at least one of the preceding claims, **characterized in that** the step of estimating the position of the face with respect to the image acquisition means (2) by processing said images is performed by acquiring an image of the subject wearing a device fitted with at least three reference markers (10, 11, 12, 13, 14, 15).

11. System for measuring the position of a virtual notable point (PRV) designed to implement the method according to any one of the preceding claims, said system comprising:
• an acquisition means (2) for acquiring at least two images of all or part of the face of the subject, the acquisition means (2) having an optical centre;
• a computer for calculating the position of the face with respect to the image acquisition means by processing said images;
• a means for determining, in said images, the coordinates (Xpref, Ypref) of one or more reference points (PRef) formed by a corneal reflection (RC) caused by at least one external source or by the centre of the pupil;
• a computer for calculating at least one of the coordinates (XPRV, YPRV, ZPRV) of the virtual notable point (PRV) by optimization in the spatial coordinate system on the basis of the determined coordinates of the one or more reference points (PRef) using the geometric relationship.

12. Computer program product comprising program code instructions stored on a computer-readable medium, to allow the system of Claim 11 to implement the steps of the method according to any one of Claims 1 to 10 when said program is run on a computer.
